# EUROPEAN PATENT SPECIFICATION

(11) **EP 2 792 182 B1**
(45) Date of publication and mention of the grant of the patent: **26.09.2018**
(21) Application number: 11877506.3
(22) Date of filing: 16.12.2011
(51) Int. Cl.: H04W 24/00, H04L 29/06, H04M 3/22, H04W 8/00, H04L 12/26

(54) **CLASSIFICATION OF INTERCEPTED INTERNET PAYLOAD**
KLASSIFIZIERUNG VON ABGEFANGENER INTERNETNUTZLAST
CLASSIFICATION DE CHARGE UTILE INTERNET INTERCEPTÉE

(43) Date of publication of application: 22.10.2014
(73) Proprietor: Telefonaktiebolaget LM Ericsson (publ), 164 83 Stockholm (SE)
(72) Inventor: DE SANTIS, Raffaele, I-84085 Mercato San Severino (IT); FIORILLO, Lorenzo, I-81020 San Nicola la Strada (CE) (IT)
(74) Representative: Brann AB
(86) International application number: PCT/SE2011/051528
(87) International publication number: WO 2013/089605

(56) References cited:
- EP-A1- 2 157 804
- EP-A1- 2 157 804
- WO-A1-2006/128495
- WO-A1-2008/013482
- WO-A1-2009/103340
- US-A1- 2004 095 894
- US-A1- 2011 154 181
- "3rd Generation Partnership Project; Technical Specification Group Services and System Aspects; 3G security; Lawful Interception requirements (Release 11)", 3GPP STANDARD; 3GPP TS 33.106, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V11.1.0, 26 September 2011 (2011-09-26), pages 1-17, XP050554025, [retrieved on 2011-09-26]
- 'Handover interface for lawful interception' 3GPP TS 33.108 V11.1.0 September 2011, page 13, XP050554027
- 'Lawful Interception requirements' 3GPP TS 33.106 V11.1.0 September 2011, XP050554025

## Description

### TECHNICAL FIELD

The present disclosure is related to Lawful Interception. More particularly, the disclosure presents a method, an arrangement and a node entity for providing a Law Enforcement Agency with payload data of an intercepted Internet Protocol flow.

### BACKGROUND

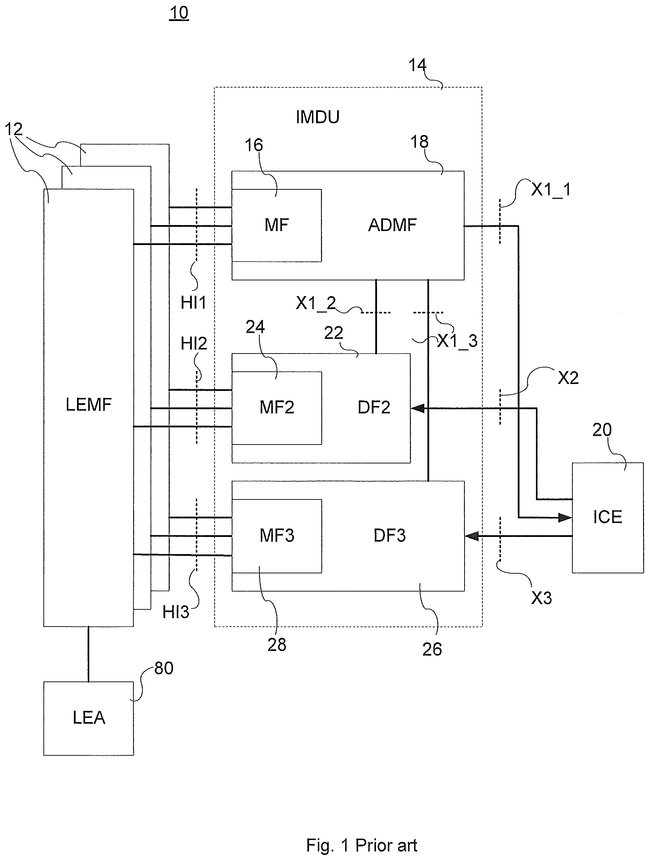

Figure 1 is a block diagram of an exemplary Lawful Interception (LI) system and network 10 according to prior art. Said system and network comprises a number of entities. The exemplary LI system comprises a Law Enforcement Management Function, LEMF, 12 for requesting LI services of the LI system and collecting the intercepted information of Intercepting Control Elements, ICEs, in the system. The system shall provide access to the intercepted Content of Communications, CC, and Intercept Related Information, IRI, of a target and services related to the target on behalf of one or more Law Enforcement Agencies, LEAs. An intercept request, also denoted Request for LI activation, is sent through a first Handover Interface, HI1, located between the Law Enforcement Management Function 12 and an Intercept Mediation and Delivery Unit, IMDU, 14 comprising a Mediation Function, MF, 16 and an Administration Function, ADMF, 18. Said Mediation Function 16 and Administration Function 18 generates based on said received request a warrant comprising said one or more target identities, and sends said warrant towards an Intercepting Control Element, ICE, 20 via an interface denoted X1_1. The ICE 20 may be connected to a node of a network, e.g. the Internet, a 3 GMS (third generation Mobile Communications System), etc., from which it intercepts said Content of Communications and Intercept Related Information of a mobile target. Said CC and IRI are network related data. As reference to the standard model, see references [1], [2] and [3], the content of communication is intercepted in the ICE network node and it is based upon duplication of target communication payload without modification. In reference [3], the interfaces HI1 and HI2 is specified in more detail. The ICE sends IRI raw data via an interface X2 to a Delivery Function for IRI reporting, DF2, 24 and a Mediation Function of IRI, MF2, 22 that generates and delivers to a collection functionality a standardized IRI report based on the received IRI report. Said standardized IRI report is sent over a standardized interface HI2 to the LEMF 12. The ICE 20 also sends CC raw data via an interface X3 to a Delivery Function for CC reporting, DF3, 26 and a Mediation Function of IRI, MF3, 28 which generates and delivers to a collection functionality a standardized CC report based on the received CC report. Said standardized CC report is sent over a standardized interface HI3 to the requesting LEMF 12.

Together with the delivery functions it is used to hide from the third generation (3G) Intercepting Control Elements ICE(s) that there might be multiple activations by different Lawful Enforcement Agencies on the same target.

The HI2 and HI3-interfaces represent the interfaces between the LEA and two delivery functions. The delivery functions are used:
- to distribute the Intercept Related Information (IRI) to the relevant LEA(s) via HI2;
- to distribute the Content of Communication (CC) to the relevant LEA(s) via HI3.

According to known internet access services, all the IP streams related to a given target is intercepted and delivered as a whole session data flow regardless any service used within an interception session. If a LEA needs to access specific contents embedded in the whole session streams, it becomes necessary to do an appropriate post-processing of the intercepted data to find the data content of interest.

EP2157804 A1 describes a lawful interception method and a lawful interception device. An interception center assigns an interception task to an interception network element (NE) to request to intercept interception targets. The interception NE reports user plane data of corresponding service sessions of the interception targets satisfying an interception reporting policy according to the received interception task and the configured interception reporting policy.

### SUMMARY

One object for a LI system is to provide techniques that avoid any limiting and time consuming post-processing of the intercepted data. Rather, the following described embodiments facilitate the post-processing of data content of interest.

According to one aspect, this disclosure presents embodiments of a method for providing a Law Enforcement Agency with payload data of an intercepted Internet Protocol flow. The payload data is belonging to one or more target identities using a specific Internet service. The method comprises a step of receiving, from an Intercepting Control Element, intercepted payload data belonging to one or more target identities using a specific Internet service. It further comprises the steps of classifying the payload data by identifying the specific IP service to which the received payload data belongs, and marking each IP packet of the received payload data with a service identifier corresponding to the classification of the specific IP service to which the received payload data belongs. The method further comprises a step of forwarding the marked IP packets of the received payload data to the Law Enforcement Agency requesting the interception, and with the service identifier being inserted in the Lawful Interception header of the HI3 protocol.

According to further one aspect, this disclosure presents embodiments of an arrangement adapted to provide a Law Enforcement Agency with payload data of an intercepted Internet Protocol flow. The payload data belongs to one or more target identities using a specific Internet service. The arrangement comprises an Intercept Mediation and Delivery Unit involving a Mediation functionality MF3 comprising a receiver configured to receive from an Intercepting Control Element intercepted payload data belonging to one or more target identities using a specific Internet service. The mediation functionality MF3 further comprises classifying means for classifying the payload data by identifying the specific IP service to which the received payload data belongs, and marking means configured to mark each IP packet of the received payload data with a service identifier corresponding to classification of the specific IP service to which the received payload data belongs. The mediation functionality MF3 further comprises a sender for forwarding the marked IP packets of the received payload data to the Law Enforcement Agency requesting the interception, and with the service identifier being inserted in the Lawful Interception header of the HI3 protocol.

According to one additional aspect, this disclosure presents an entity comprising an Intercept Mediation and Delivery Unit in a Lawful Interception Network. The unit comprises mediation functionality MF3 comprising a receiver configured to receive from an Intercepting Control Element intercepted payload data belonging to one or more target identities using a specific Internet service. The mediation functionality further comprises classifying means for classifying the payload data by identifying the specific IP service to which the received payload data belongs, and marking means configured to mark each IP packet of the received payload data with a service identifier corresponding to classification of the specific IP service to which the received payload data belongs. The mediation functionality further comprises a sender for forwarding the marked IP packets of the received payload data to the Law Enforcement Agency requesting the interception, and with the service identifier being inserted in the Lawful Interception header of the HI3 protocol.

Further embodiments are stated in the dependent claims.

One advantage is the possibility to perform an actual real-time usage and analysis of the content of interest.

Further one advantage is that the network operators will be able to mark only the packets, which are associated to the services under its direct responsibility. As example, voice communication contents are marked in the network side and immediately recognized by the LEA according to e.g., national regulations.

One additional advantage is that the LEA benefits from the additional information delivered over HI3 since the network mechanism of payload classification enables a more effective processing at LEA side, by allowing the focus on only the services of interest and facilitating further real-time processing at LEA side in presence of mixed payload with encrypted and irrelevant services.

### BRIEF DESCRIPTION OF THE DRAWINGS

The foregoing, and other, objects, features and advantages of the present embodiments over prior art will be more readily understood upon reading the following detailed description in conjunction with the drawings in which:
Figure 1 is a block diagram of an exemplary Lawful Interception system and network according to prior art;
Figure 2 is a message and signalling chart illustrating a new functionality compared to known Lawful Interception system;
Figure 3 is a block diagram of an exemplary embodiment of a Lawful Interception system and network arrangement;
Figure 4 is a flowchart illustrating one embodiment of a method for providing a Law Enforcement Agency with payload data of an intercepted Internet Protocol (IP) flow;
Figure 5 is a flowchart illustrating further one embodiment of the method for providing a Law Enforcement Agency with payload data of an intercepted IP flow;
Figure 6 is a flowchart illustrating one additional embodiment of the method for providing a Law Enforcement Agency with payload data of an intercepted IP flow;
Figure 7 is a flowchart illustrating further one additional embodiment of the method for providing a Law Enforcement Agency with payload data of an intercepted IP flow;

### DETAILED DESCRIPTION

In the following description, for purposes of explanation and not limitation, specific details are set forth, such as particular circuits, circuit components, techniques, etc. in order to provide a thorough understanding of the present aspects and embodiments. However, it will be apparent to one skilled in the art that the present aspects and embodiments may be practiced in other embodiments that depart from these specific details. In other instances, detailed descriptions of well known methods, devices, and circuits are omitted so as not to obscure the description of the present invention with unnecessary detail.

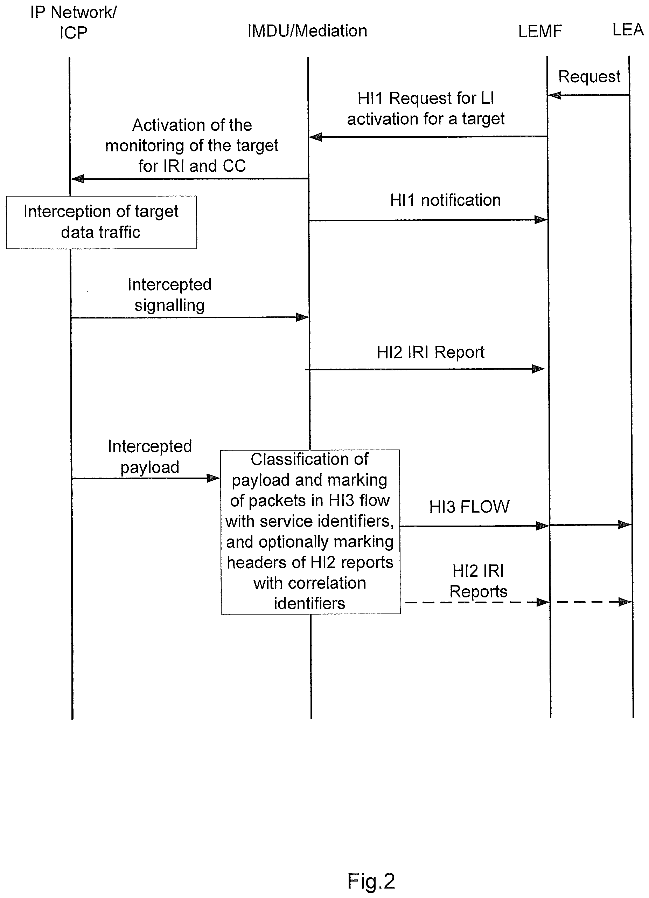

Figure 2 is a message and signalling chart illustrating a new functionality compared to known Lawful Interception system, LI system. The new functionality is achieved by equipping the DF3 function of the mediation system in the IMDU, Intercept Mediation and Delivery Unit, with capability to classify the IP packets within the intercepted IP flow, belonging to a specific IP service. Each packet related to a service is marked with a proper service identifier and sent over the ETSI standardized HI3 interface to the Law Enforcement Agency, LEA. The operator might use such mechanism to mark only the packets related to the premium service under the operator's direct responsibility. At the LEA, upon reception of the intercepted packets, the new service identifier allows the immediate recognition of the packets of interest so enabling the real time decoding/monitoring of the service/content of interest.

In the message flow chart of figure 2, the flow of data information in the system and network arrangement is illustrated. The LEA sends to a Law Enforcement Management Function unit, LEMF, a request for Legal Interception of the IP flow related to a special target of interest. The LEMF is configured to forward a LI activation request to the IMDU/Mediation system over the ETSI standardized HI1 interface. The intercept request is sent through the first Handover Interface, HI1, located between the LEMF and the node comprising Intercept Mediation and Delivery Unit, IMDU, which comprise the Administration Function, ADMF. The request is a LI activation request. The request specifies one or more target identities.

The IMDU is adapted to receive the request specifying one or more targets as one or more target identities. When the request for LI activation is received, a warrant is generated by the ADMF based on said one or more target identities. The ADMF is further configured to send via the interface X1 said warrant towards an ICE, Intercepting Control Element, which is arranged to intercept IP traffic through a network operator's network forwarding Internet data traffic flows/streams. The request may comprise a single warrant requesting for information related to the target or targets.

The ICE is configured to receive the warrant specifying one or more target things or target objects as one or more target identities. By means of the target information in the request, the ICE is capable to to intercept the IP traffic of a specified target, who is using a certain communication service during his/hers session. The ICE is also configured to deliver the IRI report to the node comprising IMDU. The ICE is further configured to generate Intercepted signaling which is delivered to the IMDU/Mediation node via the interface X2. The IMDU generates an Intercept Related Information (IRI) report comprising information related to said one or more target identities upon receipt of said intercepted signaling.

The Intercepted signaling relates to the target's session, which triggers the Lawful Interception of the session. The IMDU comprises a Delivery Function for IRI reporting, DF2, and a Mediation Function of IRI, MF2, that generates and delivers to the LEMF a standardized IRI report based on the received IRI report, which comprises information related to said one or more target identities. Said standardized IRI report is sent over a standardized interface HI2 to the LEMF. When generating said standardized IRI report related to a target identity, at least corresponding target data information is inserted. The delivery functions are used to distribute the Intercept Related Information (IRI) to the relevant LEA(s) via HI2.

When a session of a target starts, the ICE intercepts the session and the payload of the user data traffic is copied and sent over the X3 interface to the IMDU. The ICE intercepts said payload of the user data traffic, denoted as Content of Communications, CC. Said CC and IRI are network related data. As reference to the standard model, see references [1], [2] and [3], the content of communication is intercepted in the ICE network node and it is based upon duplication of target communication payload without modification.

The IMDU comprises a Delivery Function for CC reporting, DF3, and a Mediation Function of CC, MF3, that generates and delivers to the LEMF a standardized CC based on the received session payload, which comprises information related to said one or more target identities. Said standardized IRI report is sent over a standardized interface HI3 to the LEMF.

The new aspect compared to known LI systems is a new function in the IMDU. The new aspect is a payload classification function provided within the mediation system of the IMDU.

In such a new context, the system will provide the network Operator with the means for the administration of the function, in order to specify the services, e.g. VoIP, mail, messaging, national social networks, etc., that are of interest for being classified by the Mediation System before that the related payload was delivery over HI3.

On that basis, the system will provide capabilities for the real-time classification of the payload received over x3 from traffic nodes. DF3 subsystem will be responsible for the analysis of payload and of the subsequent classification of packets before HI3 delivery.

The service identifiers may also be used as correlation identifiers to improve the correlation of payload data sent over the handover interface HI3 and the IRI report comprising metadata belonging to the same target identity which report is sent over the handover interface HI2. In that case, the service identifier would represent a new correlation identifier to be included within an IRI report, reporting the additional information about the service in the form of metadata. Thus, the MF3 subsystem provides the MF2 subsystem with additional information that will be used to build metadata on flow-basis and delivered in proper IRI reports. Among the provided information to MF2, the service identifier will enhance the correlation of IRI record over HI2 with the associated payload delivered over HI3 and it will enable LEA in accessing to the proper payload, data packet per data packet, as referenced in the IRI and by just using the new correlation identifier.

A proper service identifier will be appended to each packet that matches the classification analysis. All other packets will be delivered unmarked, i.e. without a service identifier.

The delivery over HI3 will provide the means to set the service identifier as a new parameter of the LI header on top of the supported Standard for HI3 delivery, the standard according to references [4], [5], [6], [7].

The LEMF is adapted to receive the standardized IRI report with target data information related to said one or more target identities. Said information is provided to the requesting LEA, i.e. Law Enforcement Agency.

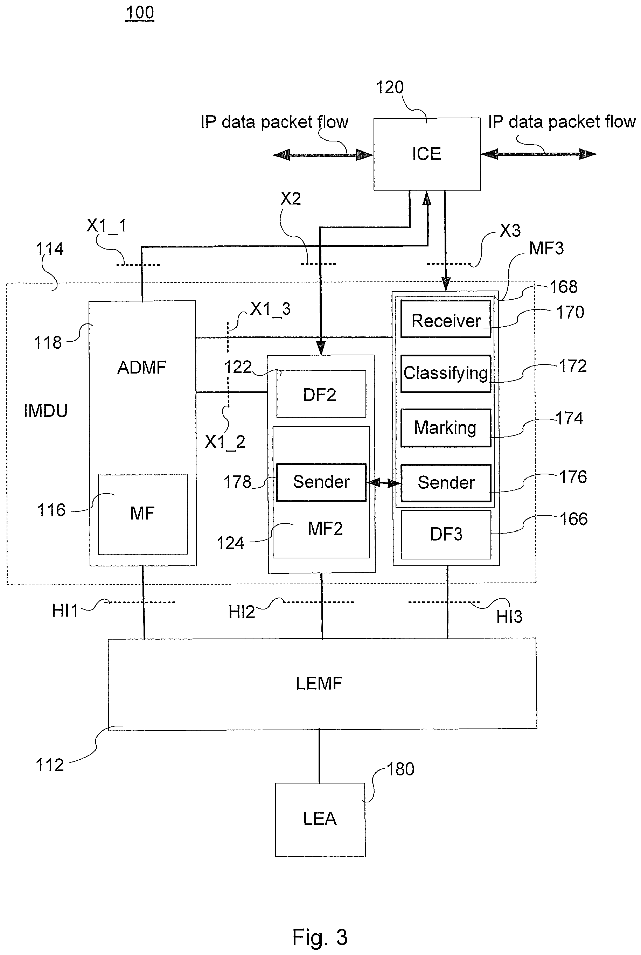

Figure 3 is a block diagram of an exemplary embodiment of a LI system and network arrangement 100. This is an arrangement that is adapted to provide a LEA, Law Enforcement Agency, 180 with Content of Communication CC and Intercept Related Information IRI from one or more sessions related to one or more target identities.

The LEA 180 sends a first LI request to a LEMF, Law Enforcement Management Function, 112. The first request specifies different kind of data and information for enabling Lawful Interception regarding data traffic flow of a specific target. An intercept request, also denoted Request for LI activation, is sent through a first Handover Interface, HI1, located between the Law Enforcement Management Function 112 and an IMDU, i.e. an Intercept Mediation and Delivery Unit, 114 comprising an Administration Function, ADMF, 118 involving a Mediation Function/Delivery Function, MF/ DF, 116. Said Mediation Function 116 and Administration Function 118 generates based on said received request a warrant comprising said one or more target identities, and sends said warrant towards an Intercepting Control Element, ICE, 120 via an interface denoted X1_1. The ICE 120 is according to the illustrated embodiments situated in a node of a data communications network or telecommunications network which handles and distributes IP data packet flows from which the ICE intercepts Content of Communications, CC, and Intercept Related Information, IRI, of one or more target's communication sessions. Said CC and IRI are network related data. As reference to the standard model, see references [1], [2] and [3], the content of communication is intercepted in the ICE network traffic node and it is based upon duplication of target communication payload without modification. The Intercepting Control Element ICE 120 comprises a controller comprising a processor unit configured to control the circuitry, units, blocks and functionalities of the Intercepting Control Element, ICE, 120 and other circuitry.

The ICE 120 is provided with a receiver unit to receive a request with a warrant specifying one or more targets as one or more target identities. The request is an order to intercept IP Data Traffic passing through the traffic node. The ICE 120 may be provided with data acquiring means for intercepting IP data traffic through the node using said one or more target identities.

Thus the ICE 120 is configured to collect payload data of the IP data stream related to one or more target identities for which interception has been requested. A sender in the ICE 120 is adapted to forward the collected data to an IMDU 114, who processes the data. Such a process may be filtering and conversion of the data to another format or standard. The processed data is delivered to a Law Enforcement Management Function 112 for further distribution to the requesting LEA 180.

The ICE 120 sends the intercepted payload via an interface X2 to a Mediation Function MF2 124 and a Delivery Function DF2 122 for IRI reporting. The Mediation Function and Delivery Function, MF2/ DF2, is configured to generate and deliver to a Collection Functionality (not shown) in the LEMF 112, a standardized IRI report based on the received IRI report comprising metadata related to the CC sent over X3 and HI3. Said standardized IRI report is sent over a standardized interface HI2 to the LEMF 112. The IRI reports comprises metadata is extracted from the application-layer in any IP payload. Metadata examples for different services are:
- For an email service: sender address, recipients' addresses, email subject, timestamp, email protocol, mail server address, attachment presence indicator, attachment file names;
- For a chat service: chat application name, user identities of involved parties, timestamp, text message;
- Web browsing service: timestamp visited URL, visited IP address, HTTP operation, exchanged bytes.

The delivery function unit DF2 122 is used to distribute the Intercept Related Information IRI to the relevant LEA or LEAs via HI2. The arrangement 100 is adapted to provide a Law Enforcement Agency 180 with payload data of an intercepted Internet Protocol flow, IP flow, wherein the payload data belongs to one or more target identities using a specific Internet service.

The Intercept Mediation and Delivery Unit 114 also involves a Mediation Function/Delivery Function, MF3/DF3. The MF3 168 comprises a receiver 170 configured to receive intercepted payload data from the Intercepting Control Element 120. The intercepted payload belongs to one or more target identities using a specific Internet service. The mediation function MF3 168 further comprises classifying means 172 for classifying the payload data by identifying the specific IP service to which the received payload data belongs. The mediation functionality MF3 168 further comprises marking means 174, which is configured to mark each IP packet of the received payload data with a service identifier corresponding to the result of the classification of the specific IP service to which the received payload data belongs, and wherein the mediation function MF3 168 further comprises a sender 176 for forwarding the marked IP packets of the received payload data to the Law Enforcement Agency 180 requesting the interception. The classifying means 172 is configured to identify the specific IP service to which the received payload data belongs by means of preferences set by the network operator. The classifying means 172 may further be configured to indicate in the encrypted payload data that the LEA 180 is not able to decrypt the encrypted payload data in real-time processing. The preference identified by the service identifier and set by the network operator may be a premium service, e.g. Voice-over-IP, chat, etc.. With Premium Service is meant IP services that are deployed under a direct intervention and responsibility of the network operator.

The sender 176 is configured to forward via the handover interface HI3 the marked IP packets of the received payload data CC to the Law Enforcement Agency, wherein the service identifier being inserted in the Lawful Interception header of the HI3 protocol.

According to some embodiments of the arrangement, the Intercept Mediation and Delivery Unit 154 may comprise a second Mediation Functionality MF2 124 comprising a second sender 178, which is configured to forward an Intercept Related Information IRI report via the second Handover Interface HI2 to the Law Enforcement Agency. Said report comprises at least metadata which is based on the received payload data which is sent to the Law Enforcement Agency via the handover interface HI3.

According to some embodiments of the arrangement, the service identifier is used as a correlation identifier to improve the correlation of payload data sent over the handover interface HI3 and an IRI report comprising metadata belonging to the same target identity which IRI report is sent over the handover interface HI2.

Examples of dedicated service identifiers are indicated in **Table 1.**

**Table 1: Examples of service identifier parameters and corresponding operator and operator related services**

| **Service Identifier Service-id** | **Service** |
|---|---|
| Id 101 | Network Operator 1 - VoIP |
| Id 121 | Network Operator 1 - Chat |
| ... | |
| ... | |
| Id 901 | Network Operator 1 - Encrypted VoIP |
| Id 902 | Network Operator 1 - Encrypted Chat |
| ... | |
| ... | |
| Id 999 | Encrypted |

The intercepted packets of the payload related to a target are labeled in the operator domain by means of a dedicated service identifier. Network operators are provided with the means for the administration of the function, in order to specify the services that are of interest for being classified by the mediation system MF before that the related payload was delivered over HI3.

As illustrated in figure 3, a node entity of the LI system comprises an Intercept Mediation and Delivery Unit 114, which comprises a Mediation Functionality MF3 168. MF3 is provided with means 172 for the real-time classification of the payload received by a receiver 170 over the interface X3 from traffic nodes comprising Intercepting Control Elements 120 intercepting the IP traffic flow of IP data packets. Thus, the MF3 subsystem is responsible for the analysis of the payload and of the subsequent classification of packets before HI3 delivery. The real-time classification is performed in accordance with and on basis on the preferences set by the network operator.

A proper service identifier will be appended to each packet that matches the classification analysis. All other packets will be delivered un-market, i.e. without a service identifier.

As illustrated in figure 3, the LI system arrangement 100 comprises a node involving an entity comprising an Intercept Mediation and Delivery Unit 114 in a Lawful Interception network. The unit 114 comprises a Mediation Functionality MF3 168 comprising a receiver 170 configured to receive from an Intercepting Control Element 120 intercepted payload data belonging to one or more target identities using a specific Internet service. The MF3 168 further comprises classifying means 172 configured to classify the payload data by identifying the specific IP service to which the received payload data belongs. The marking means 174 is configured to mark each IP packet of the received payload data with a service identifier corresponding to classification of the specific IP service to which the received payload data belongs. The MF3 168 comprises further a sender 176 for forwarding the marked IP packets of the received payload data to the Law Enforcement Agency 180 requesting the interception.

According to some embodiments of the node entity, as already mentioned above, the classifying means 172 may further be configured to indicate in the encrypted payload data that the LEA 180 is not able to decrypt the encrypted payload data in real-time processing.

According to some embodiments of the node entity, a general service identification classifier, e.g. service-id = 999, may be provided in order to indicate any generally encrypted traffic flow that the system and arrangement is able to detect and decrypt in a real-time processing manner.

According to some embodiments of the node entity, the sender 176 is configured to forward via a handover interface HI3 the marked IP packets of the received payload data to the Law Enforcement Agency 180, the service identifier being inserted in the Lawful Interception header.

According to further embodiments of the node entity, the Intercept Mediation and Delivery Unit 154 further comprises a second Mediation functionality MF2 124 wherein a second sender 178 is configured to forward an Intercept Related Information IRI report via a second Handover Interface HI2 to the Law Enforcement Agency. The report comprises at least metadata which is based on the received payload data which is sent to the Law Enforcement Agency via the handover interface HI3.

According to still further embodiments of the node entity, service identifiers are used as correlation identifiers to improve the correlation of payload data sent over the handover interface HI3 and the IRI report comprising metadata belonging to the same target identity which report is sent over the handover interface HI2. In that case, the service identifier would represent a new correlation identifier to be included within an IRI report, reporting the additional information about the service in the form of metadata. Thus, the MF3 subsystem 168 provides the MF2 subsystem 124 with additional information that will be used to build metadata on flow-basis and delivered in proper IRI reports. Among the provided information to MF2, the service identifier will enhance the correlation of IRI record over HI2 with the associated payload delivered over HI3 and it will enable LEA in accessing to the proper payload, data packet per data packet, as referenced in the IRI and by just using the new correlation identifier.

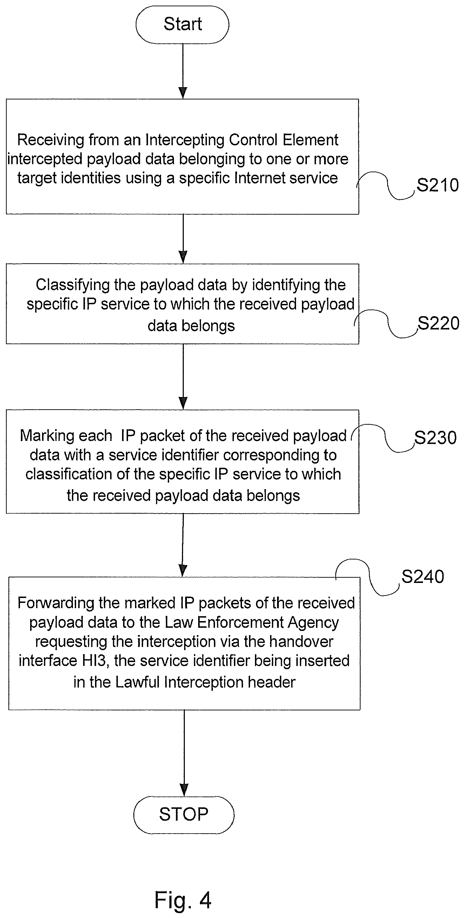

Figure 4 is a flowchart illustrating one embodiment of a method 200 for providing a Law Enforcement Agency, LEA, 180 with payload data of an intercepted Internet Protocol, IP flow, the payload data belonging to one or more target identities using a specific Internet service. The method is described mentioning blocks, units, circuitry and components which have been already described with reference to figure 3. The method comprises:
**S210:** Receiving from an Intercepting Control Element 120 intercepted payload data belonging to one or more target identities using a specific Internet service. The arrangement 100 comprises an Intercept Mediation and Delivery Unit 114, which involves a Mediation Function/Delivery Function MF3/DF3 168/166. The MF3 168 comprises a receiver 170 configured to receive intercepted payload data from an ICE 120, i.e. Intercepting Control Element 120, in the LI system arrangement 100. The ICE is situated in a traffic node of a communications network. The intercepted payload belongs to one or more target identities using a specific Internet service.
**S220:** Classifying the payload data by identifying the specific IP service to which the received payload data belongs. The mediation function MF3 168 further comprises classifying means 172 for classifying the payload data by identifying the specific IP service to which the received payload data belongs.
**S230:** Marking each IP packet of the received payload data with a service identifier corresponding to the classification of the specific IP service to which the received payload data belongs. The mediation functionality MF3 166 further comprises marking means 174, which is configured to mark each IP packet of the received payload data with a service identifier corresponding to classification of the specific IP service to which the received payload data belongs, and wherein the mediation function MF3 166 further comprises a sender 176 for forwarding the marked IP packets of the received payload data to the Law Enforcement Agency 180 requesting the interception.
**S240:** Forwarding the marked IP packets of the received payload data to the Law Enforcement Agency 180 requesting the interception. The sender 176 is configured to forward via the handover interface HI3 the marked IP packets of the received payload data CC to the LEMF 112 for further delivery to the Law Enforcement Agency, wherein the service identifier being inserted in the Lawful Interception header of the HI3 protocol.

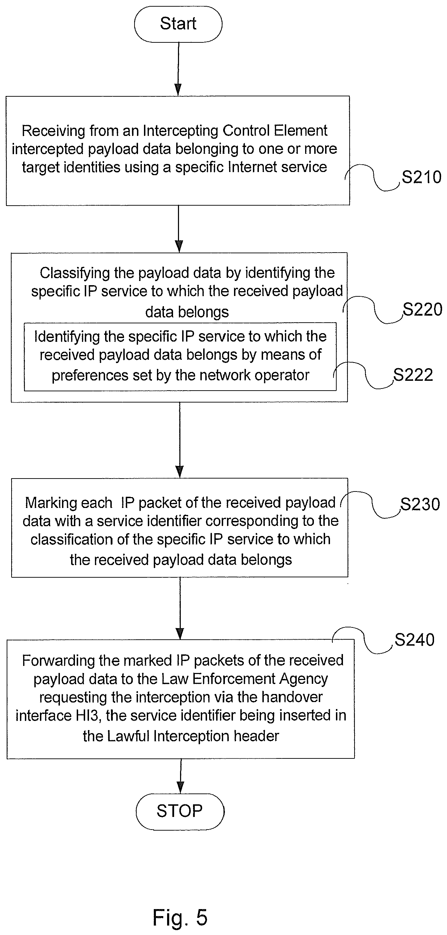

Further one embodiment of the above described method is presented in figure 5. According to said method, the classifying of the payload data involves:
**S222:** Identifying the specific IP service to which the received payload data belongs by means of preferences set by the network operator. The classifying means 172 is configured to identify the specific IP service to which the received payload data belongs by means of preferences set by the network operator. The classifying means 172 is further configured to indicate in the encrypted payload data that the LEA 180 is not able to decrypt the encrypted payload data in real-time processing. The specific IP service identified by the service identifier and set by the network operator may be a premium service, e.g. Voice-over-IP, chat, etc..

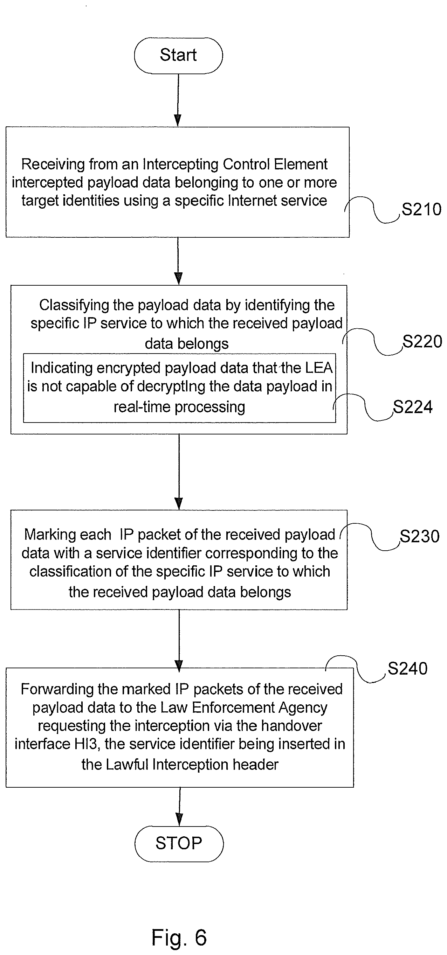

Further one embodiment of the above described methods are presented in figure 6. According to said method, the classifying of the payload data may also involve:
**S224:** Indicating to LEA that LEA is not able to decrypt the encrypted data payload in real-time processing. Thus a certain service identifier may be defined for said purpose.

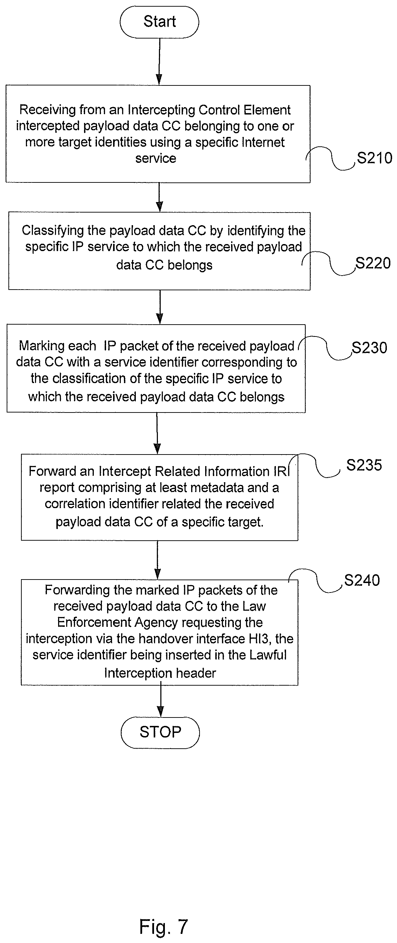

Further one embodiment of the above described methods are presented in figure 7. According to the embodiment, the forwarding of the marked IP packets of the received payload data also involves:
**S235:** Forwarding an Intercept Related Information IRI report comprising at least metadata. The mediation functionality MF2 124 is configured to forward an IRI report, i.e. an Intercept Related Information report, comprising at least metadata which is based on the received payload data sent to the Law Enforcement Agency 180 via the handover interface HI3 and the LEMF 112. The IRI report is sent over the second Handover Interface HI2 to the LEMF 112, which forwards the data to the LEA 180. The LEMF 112 may be capable of and configured to real-time process, the received payload data. The service identifier is used as a correlation identifier to improve the correlation of payload data sent over the handover interface HI3 and an IRI report comprising meta data belonging to the same target identity, which report is sent over the handover interface HI2.

The proposed embodiments of different arrangements and methods may be implemented in digital electronically circuitry, or in computer hardware, firmware, software, or in combinations of them. Said embodiments may be implemented in a computer program product tangibly embodied in a machine readable storage device for execution by a programmable processor; and method steps of the invention may be performed by a programmable processor executing a program of instructions to perform functions of the invention by operating on input data and generating output.

The described entity IMDU 114 and its blocks, means and units may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language or in assembly or machine language if desired; and in any case, the language may be a compiled or interpreted language.

A computer program product comprising computer program code loadable into a processor, wherein the computer program comprises code adapted to perform of one or more of the steps of the method embodiments described herein, when the computer program code is executed in the processor.

Generally, a processor, e.g. in a controller, will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such internal hard disks and removable disks; magneto-optical disks; and CD-ROM disks. Any of the foregoing may be supplemented by, or incorporated in, specially -designed ASICs (Application Specific Integrated Circuits).

The described embodiments comprising the new classification function provide a number of advantages.
- Network operators can mark only the packets, which are associated to the services under its direct responsibility. As example, voice communication contents are marked in the network side and immediately recognized by the LEA according to most of the national regulations;
- LEA benefits from the additional information delivered over HI3 since the network mechanism of payload classification enables a more effective processing at LEA side, by allowing the focus on only the services of interest and facilitating further real-time processing at LEA side in presence of mixed payload with encrypted and irrelevant services.

A number of embodiments have been described. It will be understood that various modifications may be made without departing from the scope of the described aspects and embodiments in this disclosure. Therefore, other implementations are within the scope of the following claims.

### References

[1] 3GPP TS 33.106 "Lawful Interception requirements (Release 8)";
[2] 3GPP TS 33.107 "Lawful interception architecture and functions (Release 8)";
[3] 3GPP TS 33.108 "Handover interface for Lawful Interception" (Release 8);
[4] ETSI TS 102 232-3 V2.2.1 (2009-01) "LI; Handover Interface and Service-Specific Details (SSD) for IP delivery; Part 3: Service-specific details for internet access services";
[5] 3GPP TS 33.107 "Lawful interception architecture and functions (Rel 10)";
[6] 3GPP TS 33.108 "Handover interface for Lawful Interception" (Rel 10);
[7] CALEA J-STD-025B Lawful Authorized Electronic Surveillance.

## Claims

1. A method (200) for providing a Law Enforcement Agency, LEA (180), with payload data of an intercepted Internet Protocol, IP, flow, the payload data belonging to one or more target identities using a specific IP service, the method comprising:
- Receiving intercepted payload data belonging to one or more target identities using a specific IP service (S210) from an Intercepting Control Element (120) by a Mediation Functionality MF3 (168) of an Intercept Mediation and Delivery Unit, IMDU (114);
- Classifying the payload data in the Mediation Functionality MF3 by identifying the specific IP service to which the received payload data belongs (S220), wherein the classifying of the payload data comprises identifying the specific IP service to which the received payload data belongs by means of preferences set by the network operator (S222);
- Marking each IP packet of the received payload data with a service identifier corresponding to the classification of the specific IP service to which the received payload data belongs (S230) and forwarding the marked IP packets of the received payload data from the Mediation Functionality MF3 to the Law Enforcement Agency (180) requesting the interception, with the service identifier being inserted in the Lawful Interception header (S240) on top of the supported standard for Handover Interface HI3.

2. The method according to claim 1, wherein the classifying of the payload data comprises:
- Indicating, by the IMDU, to LEA that LEA is not able to decrypt the encrypted data payload in real-time processing (S224).

3. The method according to claim 1, wherein the forwarding step comprises: - Forwarding via a second Handover Interface HI2 an Intercept Related Information, IRI, report comprising at least metadata which is based on the received payload data which is sent to the Law Enforcement Agency via the Handover Interface HI3, wherein the service identifier is used as a correlation identifier to improve the correlation of payload data sent over the Handover Interface HI3 and an IRI report comprising meta data belonging to the same target identity, which report is sent over the second Handover Interface HI2.

4. A Lawful Interception, LI, system and network arrangement (100) adapted to provide a Law Enforcement Agency (180) with payload data of an intercepted Internet Protocol, IP, flow, the payload data belonging to one or more target identities using a specific IP service, comprising an Intercept Mediation and Delivery Unit (114) comprising a Mediation Functionality MF3 (168) comprising a receiver (170) configured to receive from an Intercepting Control Element (120) intercepted payload data belonging to one or more target identities using a specific IP service, the Mediation Functionality MF3 further comprising classifying means (172) for classifying the payload data by identifying the specific IP service to which the received payload data belongs wherein the classifying means (172) is configured to identify the specific IP service to which the received payload data belongs by means of preferences set by the network operator, and marking means (174) configured to mark each IP packet of the received payload data with a service identifier corresponding to classification of the specific IP service to which the received payload data belongs, and wherein the Functionality MF3 further comprises a sender (176) for forwarding the marked IP packets of the received payload data, with the service identifier being inserted in the Lawful Interception header on top of the supported standard for Handover Interface HI3, to the Law Enforcement Agency (180) requesting the interception.

5. The arrangement according to claim 4, wherein the classifying means (172) is configured to indicate to LEA (180) that LEA is not capable of decrypting the encrypted data payload in real-time processing.

6. The arrangement according to claim 4 or 5, wherein the Intercept Mediation and Delivery Unit (154) comprises a second Mediation Functionality MF2 (124) comprising a second sender (178), which is configured to forward an Intercept Related Information, IRI, report via a second Handover Interface HI2 to the Law Enforcement Agency, said report comprising at least meta data which is based on the received payload data which is sent to the Law Enforcement Agency via the Handover interface HI3, wherein the service identifier is used as a correlation identifier to improve the correlation of payload data sent over the Handover interface HI3 and the IRI report comprising meta data belonging to the same target identity which report is sent over the second Handover Interface HI2.

7. The arrangement according to claim 4, wherein the sender (176) is configured to forward via a Handover Interface HI3 the marked IP packets of the received payload data to the Law Enforcement Agency (180), the service identifier being inserted in the Lawful Interception header.

8. A computer program product comprising computer program code loadable into a processor, **characterized in that** the computer program comprises code adapted to perform the method of claims 1 - 3, when the computer program code is executed in the processor.

## Patentansprüche

1. Verfahren (200) zum Bereitstellen von Nutzlastdaten eines abgefangenen Flusses eines Internetprotokolls (Internet Protocol - IP) an eine Strafverfolgungsbehörde (Law Enforcement Agency - LEA), wobei die Nutzlastdaten zu einer oder mehreren Zielidentitäten gehören, die einen bestimmten IP-Dienst verwenden, wobei das Verfahren Folgendes umfasst:
- Empfangen von abgefangenen Nutzlastdaten, die zu einer oder mehreren Zielidentitäten gehören, die einen bestimmten IP-Dienst verwenden (S210), von einem Abfangsteuerelement (120) durch eine Vermittlungsfunktionalität MF3 (168) einer Vermittlungs- und Liefereinheit zum Abfangen (Intercept Mediation and Delivery Unit - IMDU) (114);
- Klassifizieren der Nutzlastdaten in der Vermittlungsfunktionalität MF3 durch Identifizieren des bestimmten IP-Dienstes, zu dem die empfangenen Nutzlastdaten gehören (S220), wobei das Klassifizieren der Nutzlastdaten Identifizieren des bestimmten IP-Dienstes, zu dem die empfangenen Nutzlastdaten gehören, anhand von durch den Netzbetreiber festgelegten Präferenzen (S222) umfasst;
- Markieren jedes IP-Pakets der empfangenen Nutzlastdaten mit einer Dienstkennung, die der Klassifizierung des bestimmten IP-Dienstes, zu dem die empfangenen Nutzlastdaten gehören, entspricht (S230) und Weiterleiten der markierten IP-Pakete der empfangenen Nutzlastdaten von der Vermittlungsfunktionalität MF3 an die Strafverfolgungsbehörde (180), die das Abfangen anfordert, wobei die Dienstkennung zusätzlich zu dem unterstützten Standard für eine Übergabeschnittstelle HI3 in den Kopf zum rechtmäßigen Abfangen eingefügt ist (S240).

2. Verfahren nach Anspruch 1, wobei das Klassifizieren der Nutzlastdaten Folgendes umfasst:
- Angeben durch die IMDU an die LEA, dass die LEA nicht dazu in der Lage ist, die verschlüsselte Datennutzlast in Echtzeitverarbeitung zu entschlüsseln (S224).

3. Verfahren nach Anspruch 1, wobei der Schritt des Weiterleitens Folgendes umfasst:
- Weiterleiten eines Berichts mit abfangbezogenen Informationen (Intercept Related Information - IRI) über eine zweite Übergabeschnittstelle HI2, der mindestens Metadaten umfasst, die auf den empfangenen Nutzlastdaten beruhen, die über die Übergabeschnittstelle HI3 an die Strafverfolgungsbehörde gesendet werden, wobei die Dienstkennung als Korrelationskennung verwendet wird, um die Korrelation von über die Übergabeschnittstelle HI3 gesendeten Nutzlastdaten und einem IRI-Bericht, der Metadaten umfasst, die zu der gleichen Zielidentität gehören, zu verbessern, wobei der Bericht über die zweite Übergabeschnittstelle HI2 gesendet wird.

4. System- und Netzanordnung (100) zum rechtmäßigen Abfangen (Lawful Interception - LI), die dazu ausgelegt ist, einer Strafverfolgungsbehörde (180) Nutzlastdaten eines abgefangenen Flusses eines Internetprotokolls (IP) bereitzustellen, wobei die Nutzlastdaten zu einer oder mehreren Zielidentitäten gehören, die einen bestimmten IP-Dienst verwenden, umfassend eine Vermittlungs- und Liefereinheit zum Abfangen (114), die eine Vermittlungsfunktionalität MF3 (168) umfasst, die einen Empfänger (170) umfasst, der dazu konfiguriert ist, von einem Abfangsteuerelement (120) abgefangene Nutzlastdaten zu empfangen, die zu einer oder mehrere Zielidentitäten gehören, die einen bestimmten IP-Dienst verwenden, wobei die Vermittlungsfunktionalität MF3 ferner Folgendes umfasst: ein Klassifizierungsmittel (172) zum Klassifizieren der Nutzlastdaten durch Identifizieren des bestimmten IP-Dienstes, zu dem die empfangenen Nutzlastdaten gehören, wobei das Klassifizierungsmittel (172) dazu konfiguriert ist, den bestimmten IP-Dienst, zu dem die empfangenen Nutzlastdaten gehören, anhand von durch den Netzbetreiber festgelegten Präferenzen zu identifizieren, und ein Markierungsmittel (174), das dazu konfiguriert ist, jedes IP-Paket der empfangenen Nutzlastdaten mit einer Dienstkennung zu markieren, die der Klassifizierung des bestimmten IP-Dienstes entspricht, zu dem die empfangenen Nutzlastdaten gehören, und wobei die Funktionalität MF3 ferner einen Sender (176) zum Weiterleiten der markierten IP-Pakete der empfangenen Nutzlastdaten, wobei die Dienstkennung zusätzlich zu dem unterstützten Standard für eine Übergabeschnittstelle HI3 in den Kopf zum rechtmäßigen Abfangen eingefügt ist, an die Strafverfolgungsbehörde (180), die das Abfangen anfordert, umfasst.

5. Anordnung nach Anspruch 4, wobei das Klassifizierungsmittel (172) dazu konfiguriert ist, der LEA (180) anzugeben, dass die LEA nicht dazu in der Lage ist, die verschlüsselte Datennutzlast in Echtzeitverarbeitung zu entschlüsseln.

6. Anordnung nach Anspruch 4 oder 5, wobei die Vermittlungs- und Liefereinheit zum Abfangen (154) eine zweite Vermittlungsfunktionalität MF2 (124) umfasst, die einen zweiten Sender (178) umfasst, der dazu konfiguriert ist, einen Bericht mit abfangbezogenen Informationen (IRI) über eine zweite Übergabeschnittstelle HI2 an die Strafverfolgungsbehörde weiterzuleiten, wobei der Bericht mindestens Metadaten umfasst, die auf den empfangenen Nutzlastdaten beruhen, die über die Übergabeschnittstelle HI3 an die Strafverfolgungsbehörde gesendet werden, wobei die Dienstkennung als Korrelationskennung verwendet wird, um die Korrelation von über die Übergabeschnittstelle HI3 gesendeten Nutzlastdaten und dem IRI-Bericht, der Metadaten umfasst, die zu der gleichen Zielidentität gehören, zu verbessern, wobei der Bericht über die zweite Übergabeschnittstelle HI2 gesendet wird.

7. Anordnung nach Anspruch 4, wobei der Sender (176) dazu konfiguriert ist, die markierten IP-Pakete der empfangenen Nutzlastdaten über eine Übergabeschnittstelle HI3 an die Strafverfolgungsbehörde (180) weiterzuleiten, wobei die Dienstkennung in den Kopf zum rechtmäßigen Abfangen eingefügt ist.

8. Computerprogrammprodukt, das Computerprogrammcode umfasst, der in einen Prozessor geladen werden kann, **dadurch gekennzeichnet, dass** das Computerprogramm Code umfasst, der dazu ausgelegt ist, das Verfahren nach Anspruch 1-3 durchzuführen, wenn der Computerprogrammcode in dem Prozessor ausgeführt wird.

## Revendications

1. Procédé (200) pour fournir à un Organisme d'Application de la Loi, LEA (180), des données de charge utile d'un flux intercepté de Protocole Internet, IP, les données de charge utile appartenant à une ou plusieurs identités cibles utilisant un service IP spécifique, le procédé comprenant :
- la réception de données de charge utile interceptées appartenant à une ou plusieurs identités cibles utilisant un service IP spécifique (S210) en provenance d'un Élément de Commande d'Interception (120) par une Fonctionnalité de Médiation MF3 (168) d'une Unité de Médiation d'Interception et de Fourniture, IMDU (114) ;
- la classification des données de charge utile dans la Fonctionnalité de Médiation MF3 en identifiant le service IP spécifique auquel appartiennent les données de charge utile reçues (S220), dans lequel la classification des données de charge utile comprend l'identification du service IP spécifique auquel les données de charge utile reçues appartiennent au moyen de préférences fixées par l'opérateur réseau (S222) ;
- le marquage de chaque paquet IP des données de charge utile reçues avec un identifiant de service correspondant à la classification du service IP spécifique auquel les données de charge utile reçues appartiennent (S230) et le transfert des paquets IP marqués des données de charge utile reçues de la Fonctionnalité de Médiation MF3 à l'Organisme d'Application de la Loi (180) demandant l'interception, avec l'identifiant de service inséré dans l'en-tête d'Interception Légale (S240) au-dessus du standard supporté pour l'Interface de Transfert HI3.

2. Procédé selon la revendication 1, dans lequel la classification des données de charge utile comprend :
- l'indication, par l'IMDU, au LEA que le LEA n'est pas capable de déchiffrer la charge utile chiffrée en temps réel (S224).

3. Procédé selon la revendication 1, dans lequel l'étape de transfert comprend : - le transfert, via une seconde Interface de Transfert HI2, d'un rapport d'Informations Relatives à l'Interception, IRI, comprenant au moins des métadonnées qui sont basées sur les données de charge utile reçues qui sont envoyées à l'Organisme d'Application de la Loi via l'Interface de Transfert HI3, dans lequel l'identifiant de service est utilisé comme un identifiant de corrélation pour améliorer la corrélation de données de charge utile envoyées via l'Interface de Transfert HI3 et d'un rapport IRI comprenant des métadonnées appartenant à la même identité cible, lequel rapport est envoyé via la seconde Interface de Transfert HI2.

4. Système et agencement de réseau d'Interception Légale, LI, (100) adapté pour fournir à un Organisme d'Application de la Loi (180) des données de charge utile d'un flux intercepté de Protocole Internet, IP, les données de charge utile appartenant à une ou plusieurs identités cibles utilisant un service IP spécifique, comprenant une Unité de Médiation d'Interception et de Fourniture (114) comprenant une Fonctionnalité de Médiation MF3 (168) comprenant un récepteur (170) configuré pour recevoir d'un Élément de Commande d'Interception (120) des données de charge utile interceptées appartenant à une ou plusieurs identités cibles utilisant un service IP spécifique, la Fonctionnalité de Médiation MF3 comprenant en outre un moyen de classification (172) pour classifier les données de charge utile en identifiant le service IP spécifique auquel les données de charge utile reçues appartiennent, dans lequel le moyen de classification (172) est configuré pour identifier le service IP spécifique auquel les données de charge utile reçues appartiennent au moyen de préférences fixées par l'opérateur réseau, et un moyen de marquage (174) configuré pour marquer chaque paquet IP des données de charge utile reçues avec un identifiant de service correspondant à la classification du service IP spécifique auquel les données de charge utile reçues appartiennent, et
dans lequel la Fonctionnalité MF3 comprend en outre un émetteur (176) pour transférer les paquets IP marqués des données de charge utile reçues, avec l'identifiant de service inséré dans l'en-tête d'Interception Légale au-dessus du standard supporté pour l'Interface de Transfert HI3, à l'Organisme d'Application de la Loi (180) demandant l'interception.

5. Agencement selon la revendication 4, dans lequel le moyen de classification (172) est configuré pour indiquer au LEA (180) que le LEA n'est pas capable de déchiffrer la charge utile chiffrée en temps réel.

6. Agencement selon la revendication 4 ou 5, dans lequel l'Unité de Médiation d'Interception et de Fourniture (154) comprend une seconde Fonctionnalité de Médiation MF2 (124) comprenant un second émetteur (178), qui est configuré pour transférer un rapport d'Informations Relatives à l'Interception, IRI, via une seconde Interface de Transfert HI2 à l'Organisme d'Application de la Loi, ledit rapport comprenant au moins des métadonnées qui sont basées sur les données de charge utile reçues qui sont envoyées à l'Organisme d'Application de la Loi via l'Interface de Transfert HI3, dans lequel l'identifiant de service est utilisé comme un identifiant de corrélation pour améliorer la corrélation de données de charge utile envoyées via l'Interface de Transfert HI3 et du rapport IRI comprenant des métadonnées appartenant à la même identité cible, lequel rapport est envoyé via la seconde Interface de Transfert HI2.

7. Agencement selon la revendication 4, dans lequel l'émetteur (176) est configuré pour transférer via une Interface de Transfert HI3 les paquets IP marqués des données de charge utile reçues à l'Organisme d'Application de la Loi (180), l'identifiant de service étant inséré dans l'en-tête d'Interception Légale.

8. Produit de programme informatique comprenant du code de programme informatique pouvant être chargé dans un processeur, **caractérisé en ce que** le programme informatique comprend du code adapté pour réaliser le procédé selon les revendications 1 à 3, lorsque le code de programme informatique est exécuté dans le processeur.
